# EUROPEAN PATENT SPECIFICATION

(11) **EP 4 280 314 B1**
(45) Date of publication and mention of the grant of the patent: **09.07.2025**
(21) Application number: 22925226.7
(22) Date of filing: 18.02.2022
(51) Int. Cl.: H01M 4/62, C01G 53/00, H01M 4/131, H01M 4/36, H01M 4/525

(54) **COMPOSITE POSITIVE ELECTRODE MATERIAL AND PREPARATION METHOD THEREFOR, AND LITHIUM-ION BATTERY**
ZUSAMMENGESETZTES POSITIVELEKTRODENMATERIAL UND HERSTELLUNGSVERFAHREN DAFÜR SOWIE LITHIUM-IONEN-BATTERIE
MATÉRIAU D'ÉLECTRODE POSITIVE COMPOSITE AINSI QUE SON PROCÉDÉ DE PRÉPARATION ET BATTERIE AU LITHIUM-ION

(30) Priority: 16.02.2022 CN 202210142540
(43) Date of publication of application: 22.11.2023
(73) Proprietor: BTR NANO TECH CO., LTD., Shenzhen, Guangdong 518106 (CN); Panasonic Energy Co., Ltd., Osaka 570-8511 (JP)
(72) Inventor: HUANG, Youyuan, Shenzhen, Guangdong 518106 (CN); YANG, Shunyi, Shenzhen, Guangdong 518106 (CN); ZHANG, Hongxu, Shenzhen, Guangdong 518106 (CN); SONG, Xiong, Shenzhen, Guangdong 518106 (CN); YAN, Wuwei, Shenzhen, Guangdong 518106 (CN); LUO, Liang, Shenzhen, Guangdong 518106 (CN); NOMURA, Shun, Daito-shi, Osaka 574-0035 (JP); MORITA, Koki, Daito-shi, Osaka 574-0035 (JP); SHINOMIYA, Takuya, Daito-shi, Osaka 574-0035 (JP)
(74) Representative: advotec.
(86) International application number: PCT/CN2022/076861
(87) International publication number: WO 2023/155141

(56) References cited:
- EP-A1- 3 032 619
- EP-A1- 4 086 984
- CN-A- 102 637 877
- CN-A- 105 470 495
- CN-A- 109 546 136
- CN-A- 110 611 093
- CN-A- 111 653 761
- CN-A- 112 382 741
- JP-A- 2020 177 860
- US-A1- 2017 179 484
- US-A1- 2017 365 859

## Description

### TECHNICAL FIELD

The present application relates to the field of cathode material and, in particular, to composite cathode material and method for preparing the same, and lithium ion battery.

### BACKGROUND

Lithium ion battery is widely used in electric vehicles and consumer electronics products due to the advantages of high energy density, high output power, long cycle life, and little environmental pollution. It has been a research direction for developers to improve the rate performance, thermal stability, and cycling stability of a lithium ion battery. In the nickel-rich cathode material of the prior art, the particles crack after a long cycle such that the internal structure tend to directly exposure, affecting the long cycle stability of the cathode material and the rate performance of the lithium ion battery.

Further, the preparation method of the cathode material of the prior art, for example, may employ a liquid phase mixing for coating material, but the liquid phase method tend to damage the surface structure of the cathode material. There is more cationic disorder of Li/Ni in the material, resulting poor structural stability. And the coating material is easily lost with the solution, thus it is difficult to control the coating amount. A solid phase coating may also be employed, but the cathode material coated by the solid phase has excessive residual lithium, affecting the processing performance of the cathode material, and the coating has non-uniformity

Documents EP 4 086 984, CN 110 611 093, US 2017/365859, US 2017/179484 and EP 3 032 619 disclose a composite cathode material, characterized in that the composite cathode material comprises:
an active material having a chemical formula Liₐ(NiₓCo_{y}R_{z})_{1-b}M_{b}O₂, wherein 0.9≤a≤1.10, x+y+z=1, 0.8≤x≤0.99, 0≤y≤0.15, 0≤z≤0.1, 0≤b≤0.1; R comprises Al and/or Mn, and M comprises a metal element; and
a coating layer distributed on a surface of the active material, wherein the coating layer comprises a phosphate compound.

Based on this, it is desirable to develop a composite cathode material and a method for preparing the same to improve coating uniformity, thereby improving the rate performance and cycling stability of lithium ion battery, reducing production costs.

### SUMMARY

In view of this, the present application provides a composite cathode material and a method for preparing the same, a lithium ion battery, which may improve the coating uniformity, precisely control the amount of coating, improve the rate performance and cycling stability of the lithium ion battery, and reduce production costs.

In a first aspect, an embodiment of the present application provides a composite cathode material including:
an active material having a chemical formula of Liₐ(NiₓCo_{y}R_{z})_{1-b}M_{b}O₂, where 0.9≤a≤1.10, x+y+z=1, 0.8≤x≤0.99, 0≤y≤0.15, 0≤z≤0.1, 0≤b≤0.1; R includes Al and/or Mn, and M includes a metal element;
a coating layer distributed on a surface of the active material, where the coating layer includes a phosphate compound;
the composite cathode material has a particle hardness of Cs≥50 Mpa and satisfies the following:
   Cs₁₀/Cs₅₀≥0.7; where Cs₁₀ is hardness of particles with a particle size D10, and Cs₅₀ is hardness of particles with a particle size D50.

In the above solution, the coating layer is distributed on the surface of the active material, the coating layer containing a phosphate compound, such that the cathode material has a low impedance, a high rate performance, a superior thermal stability, and excellent cycling stability. Moreover, after a modification by coating, the surface defects of the small particles are restored, the cationic disorder of Li / Ni decreases, and the particle hardness increases substantially.

In conjunction with the first aspect, in a possible embodiment, the composite cathode material satisfies at least one of the following conditions a to c:
a. M of the Liₐ(NiₓCo_{y}R_{z})_{1-b}M_{b}O₂ includes at least one of Mg, Sr, Ca, Ba, Ti, Zr, Mn, Y, Gd, W, Nb, La, and Mo;
b. the ratio of x-ray diffraction peak intensity I₀₀₃ of (003) crystal plane to x-ray diffraction peak intensity I₁₀₄ of (104) crystal plane of the active material is 1.25 or more;
c. the Li ion of the active material has an occupation ratio of 98% or more in the Li site of crystal lattice.

In conjunction with the first aspect, in a feasible embodiment, the composite cathode material satisfies at least one of the following conditions a to e:
a. the phosphate compound includes at least one of Li₃PO₄ and LiXPO₄, where X includes at least one of Na, K, Al, Sr, Zr, B, Mg, Ba, Ca, Co, and W;
b. the amount of the phosphate compound in the coating layer is from 0.05 wt% to 1.5 wt% of the mass of the active material;
c. the composite cathode material has a powder conductivity of 0.001 S/cm to 0.1 S/cm;
d. the composite cathode material has a specific surface area of 0.2 m²/g to 2.0 m²/g;
e. the composite cathode material has an average particle size of 3 µm to 20 µm.

In the present application, the particle size represents the largest linear dimension of the particle, that is, the maximum linear distance between two points on the circumference of the particle.

In the present application, D10 represents the particle size when the cumulative particle size distribution of the particles reaches 10%, meaning that the particles having a particle size less than or equal to D10 account for 10% of the total particles. In the present application, D50 represents the particle size when the cumulative particle size distribution of the particles reaches 50%, meaning that the particles having a particle size less than or equal to D50 account for 50% of the total particles.

In a second aspect, the present application provides a method for preparing the composite cathode material, where the method includes the following:
mixing and sintering a primary component, a secondary component, and a lithium compound to yield a sintered product; where the primary component includes at least one of NiₓCo_{y}R_{z}O, NiₓCo_{y}R_{z}(OH)₂, or NiₓCo_{y}R_{z}OOH, where x+y+z=1, 0.8≤x≤0.99, 0≤y≤0.15, 0≤z≤0.1, the secondary component includes at least one of an oxide of M, a hydroxide of M, or a phosphate of M, M includes a metal element, R includes Al and/or Mn;
grinding the sintered product, and washing and filtering, resulting a filter cake of active material;
coating a coating solution including phosphate ions and lithium ions with the filter cake of active material in an atomization manner to yield a composite cathode material, where the composite cathode material includes an active material and a coating layer distributed on surface of the active material, and the coating layer includes a phosphate compound.

In the present solution, the use of an atomizing coating process may avoid the filtration loss due to dissolving the coating material in the solution by using a conventional liquid phase coating, the accuracy of the coating amount can be improved. While coating uniformity and reactivity with respect to the solid phase coating are improved. During the atomizing coating process, in one aspect, the phosphate coating solution forms droplets with a micro-nano structure with higher adsorption, which can improve the reactivity of the active material during the mixing process; the coating material is more easily and uniformly embedded in pores of the active material (lithium nickel cobalt aluminum composite oxide or lithium nickel cobalt manganese composite oxide); the surface defects of the active material are restored; a homogeneous coating is formed; and particle hardness is improved. Forming a high lithium ionic conductivity network on the surface of the primary particle of the active material may significantly reduce material impedance, optimize electrochemical performance of the material. On the other aspect, the small particles in the composite cathode material have a larger surface area, and more surface defects are formed during the washing process, thus the particle hardness of the small particles is low compared to the large particles. The hardness of the small particle can be greatly improved by atomizing and coating with phosphate, making Cs₁₀/Cs₅₀≥0.7. Further, during battery electrode preparation, the small particles can have a higher compressive strength, resulting in a higher packing density of the electrodes, thereby increasing the energy density of the battery.

In conjunction with the second aspect, in a feasible embodiment, the method satisfies at least one of the following conditions a to d:
a. the lithium compound is added in an amount such that the ratio of the sum of the molar content of Ni, Co, and R to the molar content of Li in the primary component is 1:(0.9-1.10);
b. a condition for obtaining the sintered product is: heating up to 650°C to 850°C for sintering for 5 h to 20 h in an flowing oxygen atmosphere;
c. the primary component has an average particle size of 3 µm to 20 µm;
d. the lithium compound includes at least one of lithium hydroxide, lithium carbonate, lithium acetate, lithium nitrate and lithium oxalate.

In conjunction with the second aspect, in a feasible embodiment, the method satisfies at least one of the following conditions a to d:
a. a temperature of the washing is 10°C to 40°C and a time of the washing is 10 min to 60 min;
b. a wash solvent used is in an amount such that the sintered product (g)/the amount of the wash solvent (L) is 500 g/L to 2000 g/L.
c. a time of the filtering is 30 min to 150 min, the water content of the filter cake of active material is 5 wt% or less;
d. the filtering includes one of a pressure filtration and a suction filtration.

In conjunction with the second aspect, in a feasible embodiment, before the coating a coating solution including phosphate ions and lithium ions with the filter cake of active material in an atomization manner, the method further includes:
dissolving a phosphorous source, a soluble lithium compound in an aqueous solution to obtain the coating solution including phosphate ions and lithium ions.

In conjunction with the second aspect, in a feasible embodiment, the method satisfies at least one of the following conditions a to e:
a. the phosphorous source includes at least one of HPO₃, H₃PO₂, H₃PO₄, Li₃PO₄, K₃PO₄, BPO₄, NH₄H₂PO₄, (NH4)₂HPO₄, Zr(HPO₄)₂, Na₂HPO₄, SrHPO₄, BaHPO₄, Ba₃(PO₄)₂, MgHPO4, Ca(H₂PO₂)₂, Al(H₂PO₄)₃, CoHPO₄, or H₃P(W₃O₁₀)₄·nH₂O, where n≥1;
b. the soluble lithium compound includes at least one of lithium hydroxide, lithium carbonate, lithium nitrate, lithium chlorate and lithium acetate;
c. in the coating solution, the molar ratio of lithium ions to phosphate ions is (0-10): 1;
d. the mass of phosphate in the phosphorous source accounts 0.05 wt% to 1.5 wt% of the filter cake of active material;
e. the total mass of the phosphorous source and the soluble lithium compound accounts 1.5 wt% to 45 wt% of the coating solution.

In conjunction with the second aspect, in a feasible embodiment, the method satisfies at least one of the following conditions a to b:
a. the atomization manner includes at least one of ultrasonic atomization and high pressure atomization;
b. in the coating process, a temperature of the coating is controlled to be 50°C to 100°C and a heat preservation is controlled to be 5 min to 60 min.

In conjunction with the second aspect, in a feasible embodiment, after the coating process, the method further includes:
drying the composite cathode material, where a temperature of the drying is controlled to be 150°C to 210°C and a heat preservation is controlled to be 10 h to 24 h.

In a third aspect, the present application provides a lithium ion battery including a positive electrode, a negative electrode, a separator, a non-aqueous electrolyte, and a case, where the positive electrode includes a current collector and a composite cathode material, as described in the first aspect above or a composite cathode material as prepared by the method for preparing the composite cathode material as described in the second aspect above, coated on the current collector.

The technical solutions of the present application have at least the following beneficial effects:
The composite cathode material provided by the present application is distributed with a coating layer on the surface of the active material, where the high degree of crystallization of the active material is advantageous to increase the conductivity of the cathode material. The surface of and the gap between the active materials are filled or coated with the phosphate compound, which may significantly improve the conductivity of the active material. The coated cathode material has a low impedance, a high rate performance, a superior thermal stability, and excellent cycling stability. Moreover, the composite cathode material has been modified by the coated layer, resulting restoring the surface defects of active material, improving particle hardness, and facilitating to improve processing performance of the material.

The method for preparing the composite cathode material provided by the present application employs an atomizing coating process, which can avoid the filtration loss due to dissolving the coating material in the solution by using a conventional liquid phase coating, the accuracy of the coating amount can be improved. While coating uniformity and reactivity with respect to the solid phase coating are improved. During the atomizing coating process, in one aspect, the phosphate coating solution forms droplets with a micro-nano structure with higher adsorption, which can improve the reactivity of the active material during the mixing process; the coating material is more easily and uniformly embedded in pores of the active material (lithium nickel cobalt aluminum composite oxide or lithium nickel cobalt manganese composite oxide); the surface defects of the active material are restored; a homogeneous coating is formed; and particle hardness is improved. Forming a high lithium ionic conductivity network at the surface of the primary particle of the active material may significantly reduce material impedance, optimize electrochemical performance of the material. The preparation process is simple, suitable for mass production, and reduce the cost.

### BRIEF DESCRIPTION OF DRAWINGS

FIG. 1 is a process flow diagram of the method for preparing a composite cathode material provided by an embodiment of the present application;
FIG. 2 is a SEM image of the composite cathode material provided by Example 1 of the present application;
FIG. 3a is a partial SEM image of the composite cathode material prepared by Example 1 of the present application;
FIG. 3b is a phosphorus element distribution image obtained by analyzing the X-ray energy spectrum of the composite cathode material prepared by Example 1 of the present application;
FIG. 4 is a SEM image of the composite cathode material provided by Comparative Example 1 of the present application;
FIG. 5a is a partial SEM image of the composite cathode material prepared by Comparative Example 1 of the present application;
FIG. 5b is a phosphorus element distribution image obtained by analyzing the X-ray energy spectrum analysis of the composite cathode material prepared by Comparative Example 1 of the present application;
FIG. 6 is a comparison diagram of the capacity retention of the batteries made from the composite cathode material of Example 1 and Comparative Example 1 of the present application;
FIG. 7 is a comparison diagram of direct current internal resistance of the batteries made from the composite cathode material of Example 1 and Comparative Example 1 of the present application;
FIG. 8 is a comparison diagram of the impedance of the batteries made from the composite cathode material of Example 1 and Comparative Example 1 of the present application.

### DESCRIPTION OF EMBODIMENTS

The following are preferred embodiments and examples of the present application. It should be noted that, for those of ordinary skill in the art, many modifications and adaptations may be made without departing from the principles of the embodiments of the present application, which are also considered to fall within the scope of the embodiments of the present application.

A first aspect of the present application provides a composite cathode material including an active material and a coating layer distributed on a surface of the active material; where the active material has a chemical formula ofLiₐ(NiₓCo_{y}R_{z})_{1-b}M_{b}O₂, where 0.9≤a≤1.10, x+y+z=1, 0.8≤x≤0.99, 0≤y≤0.15, 0≤z≤0.1, 0≤b≤0.1; R includes Al and/or Mn, M includes a metallic element; the coating layer includes a phosphate compound; the composite cathode material has a particle hardness Cs≥50 Mpa and satisfies the following relationship: Cs₁₀/Cs₅₀≥0.7; where Cs₁₀ is the hardness of particles with a particle size D10, and Cs₅₀ is the hardness of particles with a particle size D50.

Optionally, M includes a dopant element, M includes at least one of Mg, Sr, Ca, Ba, Ti, Zr, Mn, Y, Gd, W, Nb, La, and Mo.

As an optional technical solution of the present application, the ratio of X-ray diffraction peak intensity I₀₀₃ of (003) crystal plane to X-ray diffraction peak intensity I₁₀₄ of (104) crystal plane of the active material is 1.25 or more; specifically may be 1.25, 1.26, 1.27, 1.28, 1.29, 1.30, 1.32, 1.35, 1.40, etc., which are not limited herein. It is to be appreciated that the greater the ratio of the X-ray diffraction peak intensity of the crystal plane of the active material, the higher the degree of crystallization of the active material, which facilitates increasing the conductivity of the cathode material.

As an optional technical solution of the present application, the Li ion of the active material has an occupation ratio of 98% or more in the Li site (hereinafter, also referred to as "Li site occupation ratio of Li ion"). It is noted that the Li site occupation ratio of Li ion represents the percentage of the Li ions occupying the Li site relative to all Li sites in the Li layer of the active material crystal. It is to be appreciated that the higher the Li site occupation ratio of Li ion, the higher the discharge capacity of the active material. When the Li site occupation ratio of Li ion of the active material is lower, the Li ions in the Li position become less, there are Ni, Co, Al present in the Li position, thus cationic disorder of Li/Ni tend to occur, the crystal structure of the active material becomes defective, and the discharge capacity and cycling characteristics of the active material decrease. Moreover, Li ions leaving the crystal structure may be present in the form of lithium carbonate or the like, causing gas generation, affecting the safety performance of the battery.

In the present embodiment, the surface of the active material coating the phosphate compound, the phosphate compound can increase the ionic conductivity of the active material. It is to be appreciated that the surface of and the gap between the active materials are filled or coated with the phosphate compound, which may significantly increase the ionic conductivity of the active material. The coated cathode material has a low impedance, a high rate performance, a superior thermal stability, and excellent cycling stability.

Optionally, the phosphate compound includes at least one of Li₃PO₄ and LiXPO₄, where X includes at least one of Na, K, Al, Sr, Zr, B, Mg, Ba, Ca, Co, and W, and the X is derived from a metal phosphate compound.

Optionally, the amount of the phosphate compound in the coating layer is from 0.05 wt% to 1.5 wt% of the mass of the active material, specifically may be 0.05 wt%, 0.08 wt%, 0.1 wt%, 0.2 wt%, 0.5 wt%, 0.8 wt%, 1.0 wt%, 1.2 wt%, or 1.5 wt%, etc., or other values within the above ranges, which are not limited herein.

Optionally, the composite cathode material has an average particle size of 3 µm to 20 µm; specifically 3 µm, 4 µm, 5 µm, 6 µm, 7 µm, 8 µm, 10 µm, 12 µm, 15 µm, 18 µm, or 20 µm, etc., or other values within the above ranges, which are not limited herein. Controlling the particle size of the composite cathode material within the ranges described above facilitates increasing structural stability, thermal stability, and long cycle stability of the cathode material.

As an optional technical solution to the present application, the powder conductivity of the composite cathode material at 20 kN/cm² pressurization is 0.001 S/cm - 0.1 S/cm, which ensure the charging and discharging capacity of the composite cathode material.

As an optional technical solution to the present application, the specific surface area of the composite cathode material is 0.2 m²/g to 2.0 m²/g. Specifically may be 0.2 m²/g, 0.5 m²/g, 0.7 m²/g, 0.9 m²/g, 1.1 m²/g, 1.3 m²/g, 1.5 m²/g, 2.0 m²/g, etc. Applicants have discovered, by numerous experimentation, that if the specific surface area of the composite cathode material is controlled to be within the above range, it facilitate to improve cycling performance of the lithium ion battery made of the cathode material.

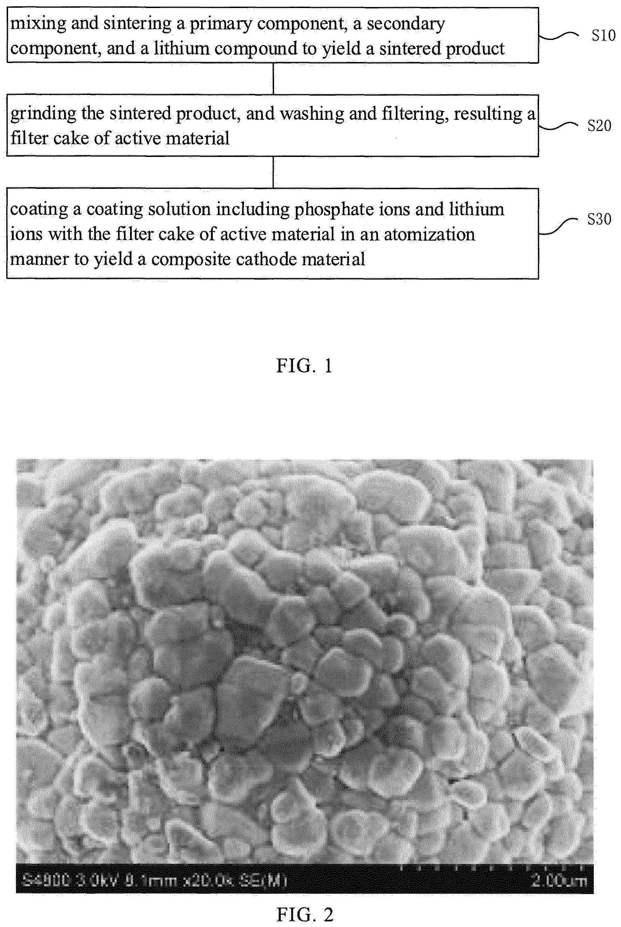

In a second aspect, the present application further provides a method for preparing the composite cathode material, as shown in FIG. 1, the method includes the following steps S10 to S30:
S10, mixing and sintering a primary component, a secondary component, and a lithium compound to yield a sintered product.

As an optional technical solution of the present application, the primary component includes at least one of NiₓCo_{y}R_{z}O, NiₓCo_{y}R_{z}(OH)₂, NiₓCo_{y}R_{z}OOH, where x+y+z=1, 0.8≤x≤0.99, 0≤y≤0.15, 0≤z≤0.1; R includes Al and/or Mn.

The molar content of Ni in NiₓCo_{y}R_{z}O, NiₓCo_{y}R_{z}(OH)₂, and NiₓCo_{y}R_{z}OOH is 0.8≤x≤0.99, where the value range of x may specifically be 0.8, 0.82, 0.84, 0.86, 0.88, 0.9, 0.92, 0.94, 0.96, 0.98, or 0.99, etc.

The molar content of Co in NiₓCo_{y}R_{z}O, NiₓCo_{y}R_{z}(OH)₂, and NiₓCo_{y}R_{z}OOH is 0≤y≤0.15, where the value range of y may specifically be 0, 0.01, 0.02, 0.05, 0.06, 0.08, 0.1, 0.11, 0.12, 0.14, or 0.15, etc.

The molar content of R in NiₓCo_{y}R_{z}O, NiₓCo_{y}R_{z}(OH)₂, and NiₓCo_{y}R_{z}OOH is 0≤z≤0.1, where the value range of z may specifically be 0, 0.01, 0.02, 0.03, 0.04, 0.05, 0.06, 0.07, 0.08, 0.09, or 0.1, etc.

Specifically, the primary component has an average particle size of 3 µm to 20 µm, specifically 3 µm, 5 µm, 7 µm, 9 µm, 10 µm, 12 µm, 14 µm, 15 µm or 20 µm, etc., or other values within the above ranges, which are not limited herein. Applicants have discovered, by numerous experimentation, that if the average particle size of the primary component is controlled to be within the range of 3 µm to 20 µm, it is able to effectively control the particle size of the active material, avoiding the cracking of the active material during cycling, facilitating to improve structural stability, thermal stability, and long cycle stability of the active material.

As an optional technical solution of the present application, the secondary component includes at least one of M oxides, M hydroxides, or M phosphates, where M is a metallic element.

As an optional technical solution of the present application, the lithium compound is selected from at least one of lithium hydroxide, lithium carbonate, lithium acetate, lithium nitrate, and lithium oxalate.

As an optional technical solution of the present application, the ratio of the sum of the molar content of Ni, Co, and R to the molar content of Li is 1:(0.9-1.10) in the primary component; specifically may be 1:0.9, 1:0.95, 1:0.96, 1:0.97, 1:0.98, 1:0.99, 1:1.00, 1:1.01, 1:1.02, 1:1.05, 1:1.06, 1:1.07, 1:1.08, 1:1.09, or 1:1.10, etc., or other values within the above ranges, which are not limited herein. When the ratio is too small, it indicates that there is an excess of Li, which leads to the formation of Li₂MO₃ phase on the surface of the material, decreasing the active Li⁺ content, resulting in a reduction in capacity, and gas generation during the cycling. When the ratio is too large, there are many Li vacancies. Ni²⁺ enters the Li layer to form a cationic disorder layer, reducing material structural stability, which leads to material degradation, and decreasing cycling performance.

As an optional technical solution of the present application, the sintered product is an active material, the conditions for obtaining the sintered product are: heating up to 650°C to 850°C for sintering for 5 h to 20 h in a flowing oxygen atmosphere. Lithium nickel cobalt aluminum composite oxide or lithium nickel cobalt manganese complex oxide is obtained by sufficiently sintering.

Specifically, the lithium content in the lithium compound on the surface of the lithium nickel cobalt aluminum composite oxide or the lithium nickel cobalt manganese composite oxide is 0.6 wt% or less of the total composite oxide, i.e., the lithium in the lithium compound on the surface of the lithium nickel cobalt aluminum composite oxide or the lithium nickel cobalt manganese composite oxide has migrated inside the composite oxide. Less lithium content on the surface may inhibit gas generation phenomenon during cycling of the cathode material.

Optionally, the oxygen content in the oxygen-containing atmosphere is 99% or more, so that each of metal elements are fully oxidized.

Optionally, the temperature of the sintering may be 650°C, 680°C, 700°C, 720°C, 750°C, 780°C, 800°C, 820°C, or 850°C, etc., or other values within the above range. Preferably, the temperature of the sintering is 700°C to 800°C

Optionally, the time of the sintering may specifically be 5 h, 7 h, 9 h, 11 h, 13 h, 15 h, 17 h, 19 h, 20 h, etc., or other values within the above range. Preferably, the time of the sintering is 8 h to 15h.

As an optional technical solution of the present application, the ratio of X-ray diffraction peak intensity I₀₀₃ of (003) crystal plane to X-ray diffraction peak intensity I₁₀₄ of (104) crystal plane of the active material is 1.25 or more; specifically may be 1.25, 1.26, 1.27, 1.28, 1.29, 1.30, 1.32, 1.35, 1.40, etc., which are not limited herein. It is to be appreciated that the greater the ratio of X-ray diffraction peak intensity of the crystal plane of the active material, the higher the degree of crystallization of the active material, which facilitates increasing the conductivity of the cathode material.

As an optional technical solution of the present application, the Li ion of the active material has an occupation ratio of 98% or more in the Li site (Li site occupation ratio of Li ion). It is noted that the Li site occupation ratio of Li ion represents the percentage of the Li ions occupying the Li site relative to all Li sites in the Li layer of the active material crystal lattice. It is to be appreciated that the higher the Li site occupation ratio of Li ion, the higher the discharge capacity of the active material. When the Li site occupation ratio of Li ion of the active material is lower, the Li ions in the Li position become less, there are Ni, Co, Al present in the Li position, thus cationic disorder of Li/Ni tend to occur. While Li ions leaving the crystal structure may be present in the form of lithium carbonate or the like. By increasing the Li position occupancy rate of Li ions, the cationic disorder of Li/Ni of the material is effectively inhibited, which can significantly increase the structural stability of the active material, improving safety performance.

In step S20, grinding the sintered product, and washing and filtering, resulting a filter cake of active material.

In a specific embodiment, the wash solvent is water, a temperature of washing is 10°C to 40°C, and a time of the washing is 10 min to 60 min. Specifically, the time of the washing may be 10 min, 20 min, 30 min, 40 min, 50 min, or 60 min, etc., and the temperature of washing may be 10°C, 20°C, 25°C, 30°C, 35°C, or 40°C, etc..

Optionally, the wash solvent is used in an amount of 500 g/L to 2000 g/L. It is noted that the amount of the wash solvent refers to the mass of the sintered product contained in the solvent per liter. Specifically, the amount of the wash solvent may be 500g/L, 600g/L, 700g/L, 800g/L, 900g/L, 1000g/L, 1200g/L, 1400g/L, 1500g/L, 1800g/L, or 2000g/L, etc., which are not limited herein. The time of the filtering is 30 min to 150 min, which may be 30 min, 50 min, 60 min, 80 min, 100 min, 120 min, or 150 min, etc.

Preferably, the temperature of the washing is 20°C to 30°C, the wash solvent is used in an amount of 800 g/L to 1500 g/L, the time of for washing is 20 min to 40 min, and the time of the filtering is 60 min to 120 min. It is to be appreciated that impurities such as lithium carbonate, lithium hydroxide, and the like attached to the surface of the sintered product may be removed as long as the sintered product is sufficiently washed. If the washing is insufficient, resulting in a high surface lithium content of the composite cathode material. During cycling of the battery, the surface residual lithium reacts with the electrolyte to produce a gas, affecting the safety of the battery.

Optionally, the water content of the filter cake of active material resulting from filtration is 5 wt% or less. Preferably, the water content of the filter cake of active material filter cake is 1 wt% or less for reducing the impact of moisture on the properties of the active material.

Optionally, prior to step S20, the method further includes:
dissolving a phosphorous source, a soluble lithium compound in an aqueous solution to obtain the coating solution including phosphate ions and lithium ions.

Optionally, the phosphorous source includes at least one of HPO₃, H₃PO₂, H₃PO₄, Li₃PO₄, and a metal phosphate compound.

Optionally, the metal phosphate compound includes at least one of K₃PO₄, BPO₄, NH₄H₂PO₄, (NH4)₂HPO₄, Zr(HPO₄)₂, Na₂HPO₄, SrHPO₄, BaHPO₄, Ba₃(PO₄)₂, MgHPO₄, Ca(H₂PO₂)₂, Al(H₂PO₄)₃, CoHPO₄, or H₃P(W₃O₁₀)₄·nH₂O, where n≥1.

Optionally, the soluble lithium compound includes at least one of lithium hydroxide, lithium carbonate, lithium nitrate, lithium chlorate and lithium acetate. Preferably, the soluble lithium compound is lithium hydroxide.

Optionally, in the coating solution, the molar ratio of the lithium ions to the phosphate ions is (0-10):1; specifically may be 0:1, 1:1, 2:1, 3:1, 4:1, 5:1, 6:1, 7:1, 8:1, 9:1, or 10:1, etc., or other values within the above ranges, which are not limited herein. The excess of lithium ion content leads to the excess of the residual lithium content on the material surface; the excess of phosphate content leads to too thick of the coating layer, which affect the capacity and rate capability of the material. Preferably, the molar ratio of lithium ions to phosphate ions is (0-5):1.

As an optional technical solution of the present application, the mass of phosphate in the phosphorous source accounts 0.05 wt% to 1.5 wt% of the filter cake of active material; specifically may be 0.05 wt%, 0.08 wt%, 0.10 wt%, 0.2 wt%, 0.3 wt%, 0.5 wt%, 0.8 wt%, 1.0 wt%, 1.2 wt%, 1.3 wt% or 1.5 wt%, etc., or other values within the above range. If the phosphate mass in the phosphorous source is excessive, the phosphate coating on the active material surface will be excessive, reducing material capacity. Preferably, the mass of phosphate in the phosphorous source accounts 0.1 wt% to 1 wt% of the filter cake of active material.

As an optional technical solution of the present application, the total mass of the phosphorous source and the soluble lithium compound accounts 1.5 wt% to 45 wt% of the coating solution, specifically may be 1.5 wt%, 5 wt%, 8 wt%, 10 wt%, 15 wt%, 20 wt%, 25 wt%, 30 wt%, 35 wt%, 40 wt% or 45 wt%, etc., or other values within the above range.

Further, the mass of the phosphorous source accounts 1.5 wt% to 30 wt% in the coating solution, specifically may be 1.5 wt%, 5 wt%, 8 wt%, 10 wt%, 15 wt%, 20 wt%, 25 wt% or 30 wt%, etc., or other values within the above range. The mass of the soluble lithium compound accounts 0 wt% to 15 wt% in the coating solution, specifically may be 0 wt%, 1 wt%, 2 wt%, 3 wt%, 4 wt%, 5 wt%, 6 wt%, 7 wt%, 8 wt%, 9 wt%, 10 wt%, 12 wt% or 15 wt%, etc., or other values within the above range.

In step S30, coating the coating solution including phosphate ions and lithium ions with the filter cake of active material in an atomization manner to yield a composite cathode material.

As an optional technical solution of the present application, the atomization manner includes at least one of ultrasonic atomization and high pressure atomization. It is to be understood that coating active material by atomization, as compared to conventional liquid phase coating, may reduce loss of phosphorous source and/or soluble lithium compound in the coating solution, and may improve the accuracy of coating amount of the coating material; and as compared to conventional solid phase coating, may improve coating uniformity and reactivity.

In the coating process, the coating solution forms droplets with a micro-nano structure by atomization, having higher adsorption, which has higher reactivity with the active material when mixed with them. The coating solution droplets are uniformly embedded or impregnated into the pores of the active material, restoring surface defects of the active material, and forming homogeneous coating. Forming a high lithium ionic conductivity network on the surface of the primary particle of the active material may significantly reduce the active material impedance, optimize electrochemical performance of the active material.

During the coating process, the temperature is controlled to be 50°C to 100°C, specifically may be 50°C, 55°C, 60°C, 65°C, 70°C, 75°C, 80°C, 85°C, 90°C, 95°C, or 100°C, etc., which are not limited herein. During the gradient heating process, the coating solution is mixed with the filter cake of the active material and dried, the coating material sufficiently reacts with the active material, thus the reactivity of the coating and the active material is improved, and the coating effect is improved.

During the coating process, the heat preservation is controlled to be 5 min to 60 min; specifically may be 5 min, 10 min, 15 min, 20 min, 25 min, 30 min, 35 min, 40 min, 45 min, 50 min, or 60 min, etc., which are not limited herein.

Optionally, after step S30, the method further includes:
Drying the composite cathode material, where a temperature of the drying is controlled to be 150°C to 210°C and a heat preservation is controlled to be 10 h to 24 h.

As an optional technical solution of the present application, the temperature of the drying may be 150°C, 155°C, 160°C, 165°C, 170°C, 175°C, 180°C, 185°C, 190°C, 195°C, 200°C, or 210°C, etc., which are not limited herein. The heat preservation specifically may be 10 h, 12 h, 14 h, 15 h, 17 h, 18 h, 19 h, 20 h, 22 h, or 24 h, etc., which are not limited herein.

As an optional technical solution of the present application, the moisture content of the dried composite cathode material is less than or equal to 0.04 wt%. As a result, the moisture of the composite cathode material is reduced, improving the processing performance of the composite cathode material.

It is to be noted that, in the present embodiment, during the coating and then drying processes, the coating material is sufficiently mixed with the active material and dried, improving the reactivity and coating uniformity, by controlling process parameters such as atomizing liquid jet velocity, mixing device speed, temperature, and the like, in a gradient heating manner.

In the present solution, the use of an atomizing coating process may avoid the filtration loss due to dissolving the coating material in the solution by using a conventional liquid phase coating, the accuracy of the coating amount can be improved. While coating uniformity and reactivity with respect to the solid phase coating are improved. During the atomizing coating process, in one aspect, the phosphate coating solution forms droplets with a micro-nano structure with higher adsorption, which can improve the reactivity of the active material during the mixing process; the coating material is more easily and uniformly embedded in pores of the active material (lithium nickel cobalt aluminum composite oxide or lithium nickel cobalt manganese composite oxide); the surface defects of the active material are restored; a homogeneous coating is formed. Forming a high lithium ionic conductivity network at the surface of the primary particle of the active material may significantly reduce material impedance, optimize electrochemical performance of the material.

In a third aspect, a embodiment of the present application further provides a lithium ion battery including a positive electrode, a negative electrode, a separator, a non-aqueous electrolyte, and a case, where the positive electrode includes a current collector and the composite cathode material, as described above or the cathode material as prepared by the method for preparing the composite cathode material as described above, coated on the current collector.

The following several examples further illustrate the embodiments of the present application. The embodiments herein are not limited to the specific examples described below. Variations may be made as appropriate within the scope of the independent claims.

### Example 1

Ni_{0.88}Co_{0.09}Al_{0.03}(OH)₂ and LiOH·H₂O were mixed by a high speed mixer in a molar ratio of Li/NiCoAl of 1.04:1, resulting in a mixture with an average particle size of 11.0 µm;
The mixture was sintered at 740°C for 10 h in an atmosphere of 99% oxygen content or more, to obtain a LiNi_{0.88}Co_{0.09}Al_{0.03}O₂ sintered product. The sintered product was controlled the average particle size of the material at 10.0 µm-12.0 µm by a gas flow pulverizer;
The 10 kg of sintered product was prepared slurry with water (L) at 1300 g/L for washing, the wash temperature was 20°C, and the wash time was 15 min. The washed slurry was pressure filtered, and the pressure filtration time was 1 h, obtaining a filter cake of LiNi_{0.88}Co_{0.09}Al_{0.03}O₂ active material;
40.0 g of LiOH·H₂O was dissolved in 300 ml of water, and 70.0 g of NH₄H₂PO₄ was added and stirred to obtain a coating solution;
10 kg of the filter cake of active material was placed in a VC mixer, the mixer was turned on at a speed of 300 rpm. The mixer inlet oil temperature was 80°C, while the coating solution was atomized into the mixer, where the coating solution injection speed was 40 mL/min. As the coating solution being all injected into the mixer, the mixing was continued for 15 min. Then, the mixer inlet oil temperature was increased to 180°C, and then a drying was conducted under a nitrogen atmosphere for 20 h, to obtain a composite cathode material of lithium phosphate coated LiNi_{0.88}Co_{0.09}Al_{0.03}O₂.

The composite cathode material prepared by this example includes an active material and a lithium phosphate coating layer on the surface of the active material; where the composite cathode material has an average particle size of 11.3 µm, a specific surface area of 0.75m²/g, and a powder conductivity of 0.056 S/cm².

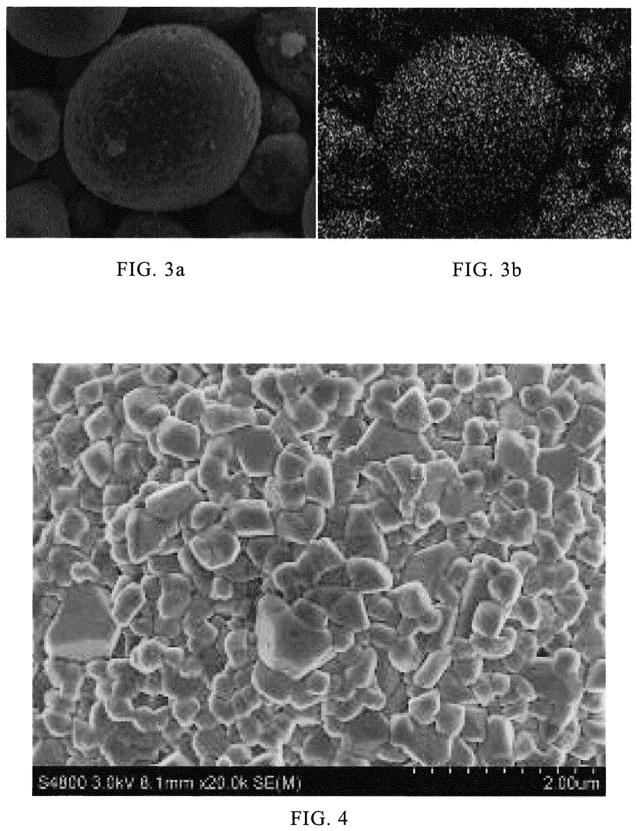

FIG. 2 is an SEM image of the composite cathode material prepared by this Example. FIG. 3a is a partial SEM image of the composite cathode material prepared by this Example; FIG. 3b is phosphorus element distribution image obtained by analyzing X-ray energy spectrum of the composite cathode material prepared by this Example.

### Example 2

Ni_{0.88}Co_{0.09}Al_{0.03}(OH)₂, LiOH·H₂O, and Zr(OH)₄ were mixed by a high speed mixer in a molar ratio of Li/NiCoAl of 1.04:1, resulting in a mixture with an average particle size of 11.0 µm, where the molar ratio of Zr to the total amount of Ni, Co, and Al is 0.005:1;
The mixture was sintered at 740°C for 10 h in an atmosphere of 99% oxygen content or more, to obtain a Li(Ni_{0.88}Co_{0.09}Al_{0.03})_{0.995}Zr_{0.005}O₂ sintered product. The sintered product was controlled the average particle size of the material at 10.0 µm to 12.0 µm by a gas flow pulverizer;
The sintered product (g) was prepared slurry with water (L) at 1300 g/L for washing, the wash temperature was 20°C, and the wash time was 15 min. The washed slurry was pressure filtered, and the pressure filtration time was 1 h, obtaining a filter cake of Li(Ni_{0.88}Co_{0.09}Al_{0.03})_{0.995}Zr_{0.005}O₂ active material;
40.0 g of LiOH·H₂O was dissolved in 300 ml of water, and 70.0 g of NH₄H₂PO₄ was added and stirred to obtain a coating solution;
10 kg of the filter cake of active material was placed in a VC mixer, the mixer was turned on at a speed of 300 rpm. The mixer inlet oil temperature was 80°C, while the coating solution was atomized into the mixer, where the coating solution injection speed was 40 mL/min. As the coating solution being all injected into the mixer, the mixing was continued for 15 min. Then, the mixer inlet oil temperature was increased to 180°C, and then a drying was conducted under a nitrogen atmosphere for 20 h, to obtain a composite cathode material of lithium phosphate coated Li(Ni_{0.88}Co_{0.09}Al_{0.03})_{0.995}Zr_{0.005}O₂.

The composite cathode material prepared by this example includes an active material and a lithium phosphate coating layer on the surface of the active material; where the composite cathode material has an average particle size of 11.6 µm, a specific surface area of 0.64 m²/g, and a powder conductivity of 0.068 S/cm².

### Example 3

Ni_{0.99}Co_{0.01}(OH)₂, LiOH·H₂O, and Zr(OH)₄, Ti(OH)₄, were mixed by a high speed mixer in a molar ratio of Li/NiCo of 1:1, resulting in a mixture with an average particle size of 5.0 µm, where the molar ratio of Zr and Ti to Ni and Co is 0.005:1, and the molar ratio of Zr and Ti is 3:2;
The mixture was sintered at 660°C for 8 h in an atmosphere of 99% oxygen content or more, to obtain a Li(Ni_{0.99}Co_{0.01})_{0.995}Zr_{0.003}Ti_{0.002}O₂ sintered product The sintered product was controlled the average particle size of the material at 4.5 µm to 5.5 µm by a gas flow pulverizer;
The sintered product (g) was prepared slurry with water (L) in 2000 g/L for washing, the wash temperature was 10°C, and the wash time was 10 min The washed slurry was pressure filtered, and the pressure filtration time was 1 h, obtaining a filter cake of Li(Ni_{0.99}Co_{0.01})_{0.995}Zr_{0.003}Ti_{0.002}O₂ active material;
30.0 g of LiOH·H₂O was dissolved in 300 ml of water, and 40.0 g of SrHPO₄ and 10 g of NH₄H₂PO₄ was added and stirred to obtain a coating solution;
10 kg of the filter cake of active material was placed in a VC mixer, the mixer was turned on at a speed of 300 rpm. The mixer inlet oil temperature was 80°C, while the coating solution was atomized into the mixer, where the coating solution injection speed was 40 mL/min. As the coating solution being all injected into the mixer, the mixing was continued for 15 min. Then, the mixer inlet oil temperature was increased to 180°C, and then a drying was conducted under a nitrogen atmosphere for 20 h, to obtain a composite cathode material of strontium lithium phosphate coated Li(Ni_{0.99}Co_{0.01})_{0.995}Zr_{0.003}Ti_{0.002}O₂.

The composite cathode material prepared by this example includes an active material and a strontium lithium phosphate coating layer on the surface of the active material; where the composite cathode material has an average particle size of 5.2 µm, a specific surface area of 0.83 m²/g, and a powder conductivity of 0.045 S/cm².

### Example 4

Ni_{0.80}Co₀₁₅Al_{0.05}(OH)₂ and LiOH·H₂O were mixed by a high speed mixer in a molar ratio of Li/NiCoAl of 1.04:1, resulting in a mixture with an average particle size of 15.0 µm;
The mixture was sintered at 800°C for 15 h in an atmosphere of 99% oxygen content or more, to obtain a LiNi_{0.80}Co_{0.15}Al_{0.05}O₂ sintered product. The sintered product was controlled the average particle size of the material at 14.0 µm to 16.0 µm by a gas flow pulverizer;
The sintered product was prepared slurry with water at 1300 g/L for washing, the wash temperature was 30°C, and the wash time was 60 min. The washed slurry was pressure filtered, and the pressure filtration time was 1 h, obtaining a filter cake of LiNi_{0.80}Co_{0.15}Al_{0.05}O₂ active material;
30.0 g of LiOH·H₂O was dissolved in 300 ml of water, and 49.0 g of Zr(HPO₄)₂·H₂O was added and stirred to obtain a coating solution;
10 kg of the filter cake of active material was placed in a VC mixer, the mixer was turned on at a speed of 300 rpm. The mixer inlet oil temperature was 80°C, while the coating solution was atomized into the mixer, where the coating solution injection speed was 40 mL/min. As the coating solution being all injected into the mixer, the mixing was continued for 15 min. Then, the mixer inlet oil temperature was increased to 180°C, and then a drying was conducted under a nitrogen atmosphere for 20 h, to obtain a composite cathode material of zirconium lithium phosphate coated LiNi_{0.80}Co_{0.15}Al_{0.05}O₂.

The composite cathode material made prepared by this example includes an active material and a zirconium lithium phosphate coating layer on the surface of the active material; where the composite cathode material has an average particle size of 15.3 µm, a specific surface area of 0.92 m²/g, and a powder conductivity of 0.057 S/cm².

### Example 5

Ni_{0.88}Co_{0.06}Mn_{0.03}Al_{0.03}(OH)₂, LiOH·H₂O, and lithium acetate were mixed by a high speed mixer in a molar ratio of Li/NiCoMnAl of 1.04:1, resulting in a mixture with an average particle size of 11.0 µm;
The mixture was sintered at 740°C for 10 h in an atmosphere of 99% oxygen content or more, to obtain a LiNi_{0.88}Co_{0.06}Mn_{0.03}Al_{0.03}O₂ sintered product The sintered product was controlled the average particle size of the material at 10.0 µm to 12.0 µm by a gas flow pulverizer;
The sintered product was prepared slurry with water at 1300 g/L for washing, the wash temperature was 20°C, and the wash time was 15 min. The washed slurry was pressure filtered, and the pressure filtration time was 1 h, obtaining a filter cake of LiNi_{0.88}Co_{0.06}Mn_{0.03}Al_{0.03}O₂ active material;
50.0 g of H₃PO₄ was dissolved in 250 ml of water and stirred to obtain a coating solution;
10 kg of the filter cake of active material was placed in a VC mixer, the mixer was turned on at a speed of 300 rpm. The mixer inlet oil temperature was 80°C, while the coating solution was atomized into the mixer, where the coating solution injection speed was 40 mL/min. As the coating solution being all injected into the mixer, the mixing was continued for 15 min. Then, the mixer inlet oil temperature was increased to 180°C, and then a drying was conducted under a nitrogen atmosphere for 20 h, to obtain a composite cathode material of lithium phosphate coated LiNi_{0.88}Co_{0.06}Mn_{0.03}Al_{0.03}O₂.

The composite cathode material prepared by this example includes an active material and a lithium phosphate coating layer on the surface of the active material; where the composite cathode material has an average particle size of 11.9 µm, a specific surface area of 1.01 m²/g, and a powder conductivity of 0.082 S/cm².

### Example 6

Ni_{0.91}Co_{0.04}Al_{0.05}(OH)₂ and LiOH·H₂O were mixed by a high speed mixer in a molar ratio of Li/NiCoAl of 1.04: 1, resulting in a mixture with a particle average particle size of 11.0 µm;
The mixture was sintered at 740°C for 10 h in an atmosphere of 99% oxygen content or more, to obtain a LiNi_{0.91}Co_{0.04}Al_{0.05}O₂ sintered product. The sintered product was controlled the average particle size of the material at 10.0 µm to 12.0 µm by a gas flow pulverizer;
The sintered product was prepared slurry with water at 1300 g/L for washing, the wash temperature was 20°C, and the wash time was 15 min. The washed slurry was pressure filtered, and the pressure filtration was 1 h, obtaining a filter cake of LiNi_{0.91}Co_{0.04}Al_{0.05}O₂ active material;
50.0 g of H₃PO₄ was dissolved in 250 ml of water and stirred to obtain a coating solution;
10 kg of the filter cake of active material was placed in a VC mixer, the mixer was turned on at a speed of 300 rpm. The mixer inlet oil temperature was 80°C, while the coating solution was atomized into the mixer, where the coating solution injection speed was 40 mL/min. As the coating solution being all injected into the mixer, the mixing was continued for 15 min. Then, the mixer inlet oil temperature was increased to 180°C, and then a drying was conducted under a nitrogen atmosphere for 20 h, to obtain a composite cathode material of lithium phosphate coated LiNi_{0.91}Co_{0.04}Al_{0.05}O₂.

The composite cathode material prepared by this example includes an active material and a lithium phosphate coating layer on the surface of the active material; where the composite cathode material has an average particle size of 11.6 µm, a specific surface area of 1.13 m²/g, and a powder conductivity of 0.039 S/cm².

### Example 7

Ni_{0.83}Co_{0.11}Mn_{0.06}(OH)₂ and LiOH·H₂O were mixed by a high speed mixer in a molar ratio of Li/NiCoMn of 1.04:1, resulting in a mixture with an average particle size of 11.0 µm;
The mixture was sintered at 760°C for 10 h in an atmosphere of 99% oxygen content or more, to obtain a LiNi_{0.83}Co_{0.11}Mn_{0.06}O₂ sintered product. The sintered product was controlled the average particle size of the material at 10.0 µm to 12.0 µm by a gas flow pulverizer;
The 10 kg of sintered product was prepared slurry with water at 1000 g/L for washing, the wash temperature was 20°C, and the wash time was 20 min. The washed slurry was pressure filtered, and the pressure filtration time was 1 h, obtaining a filter cake of LiNi_{0.83}Co_{0.11}Mn_{0.06}O₂ active material;
60.0 g of H₃PO₄ was dissolved in 250 ml of water and stirred to obtain a coating solution;
10 kg of the filter cake of active material was placed in a VC mixer, the mixer was turned on at a speed of 300 rpm. The mixer inlet oil temperature was 80°C, while the coating solution was atomized into the mixer, where the coating solution injection speed was 40 mL/min. As the coating solution being all injected into the mixer, the mixing was continued for 15 min. Then, the mixer inlet oil temperature was increased to 180°C, and then a drying was conducted under a nitrogen atmosphere for 20 h, to obtain a composite cathode material of lithium phosphate coated LiNi_{0.83}Co_{0.11}Mn_{0.06}O₂.

The composite cathode material prepared by this example includes an active material and a lithium phosphate coating layer on the surface of the active material; where the composite cathode material has an average particle size of 11.5 µm, a specific surface area of 0.65 m²/g, and a powder conductivity of 0.060 S/cm².

### Comparative Example 1

Ni_{0.88}Co_{0.09}Al_{0.03}(OH)₂ and LiOH·H₂O were mixed by a high speed mixer in a molar ratio of Li/NiCoAl of 1.04:1, resulting in a mixture with an average particle size of 11.0 µm;
The mixture was sintered at 740°C for 10 h in an atmosphere of 99% oxygen content or more, to obtain a LiNi_{0.88}Co_{0.09}Al_{0.03}O₂ sintered product. The sintered product was controlled the average particle size of the material at 10.0 µm to 12.0 µm by a gas flow pulverizer;
The 10 kg of sintered product was prepared slurry with water at 1300 g/L for washing, the wash temperature was 20°C, and the wash time was 15 min. The washed slurry was pressure filtered, and the pressure filtration time was 1 h, obtaining a filter cake of LiNi_{0.88}Co_{0.09}Al_{0.03}O₂ active material;
The filter cake of LiNi_{0.88}Co_{0.09}Al_{0.03}O₂ active material was dried in a nitrogen atmosphere at 180°C for 20 h, to obtain a cathode material of LiNi_{0.88}Co_{0.09}Al_{0.03}O₂.

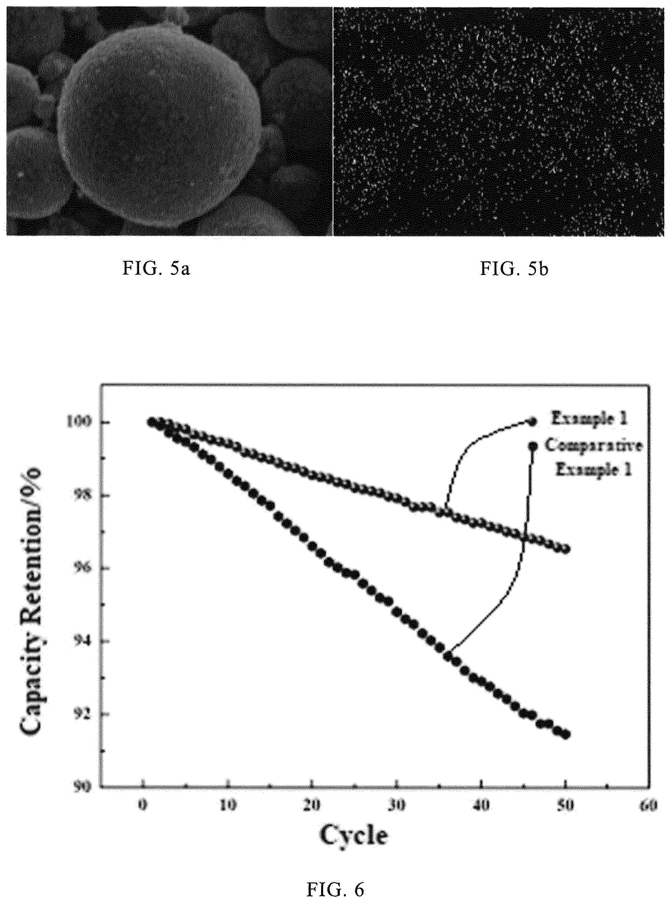

FIG. 4 is an SEM image of the composite cathode material prepared by this comparative example. FIG. 5a is a partial SEM image of a composite cathode material prepared by this comparative example; and FIG. 5b is phosphorus element distribution image obtained by analyzing X-ray energy spectrum of the composite cathode material prepared by this comparative examples.

### Comparative Example 2

Ni_{0.88}Co_{0.09}Al_{0.03}(OH)₂ and LiOH·H₂O were mixed by a high speed mixer in a molar ratio of Li/NiCoAl of 1.04:1, resulting in a mixture with an average particle size of 11.0 µm;
The mixture was sintered at 740°C for 10 h in an atmosphere of 99% oxygen content or more, to obtain a LiNi_{0.88}Co_{0.09}Al_{0.03}O₂ sintered product. The sintered product was controlled the average particle size of the material at 10.0 µm to 12.0 µm by a gas flow pulverizer;
The 10 kg of sintered product was prepared slurry with water at 1300 g/L, and 40.0 g of LiOH·H₂O, 70.0 g of NH₄HPO₄ were added in turn, washing, where the wash temperature was 20°C, and the wash time was 15 min. The washed slurry was pressure filtered, and the pressure filtration time was 1 h, obtaining a filter cake of LiNi_{0.88}Co_{0.09}Al_{0.03}O₂ active material;
The filter cake of active material was took out to dried in a nitrogen atmosphere at 180°C for 20 h, to obtain a cathode material of lithium phosphate coated LiNi_{0.88}Co_{0.09}Al_{0.03}O₂.

### Comparative Example 3

Ni_{0.88}Co_{0.09}Al_{0.03}(OH)₂ and LiOH·H₂O were mixed by a high speed mixer in a molar ratio of Li/NiCoAl of 1.04:1, resulting in a mixture with an average particle size of 11.0 µm;
The mixture was sintered at 740°C for 10 h in an atmosphere of 99% oxygen content or more, to obtain a LiNi_{0.88}Co_{0.09}Al_{0.03}O₂ sintered product. The sintered product was controlled the average particle size of the material at 10.0 µm to 12.0 µm by a gas flow pulverizer;
40.0 g of LiOH·H₂O was dissolved in 300 ml of water, and 70.0g of NH₄HPO₄ was added and stirred to obtain a coating solution;
10 kg of the LiNi_{0.88}Co_{0.09}Al_{0.03}O₂ sintered product was placed in a VC mixer, the mixer was turned on at a speed of 300 rpm. The mixer inlet oil temperature was 80°C, while the coating solution was atomized into the mixer, where the coating solution injection speed was 40 mL/min. As the coating solution being all injected into the mixer, the mixing was continued for 15 min. Then, the mixer inlet oil temperature was increased to 180°C, and then a drying was conducted under a nitrogen atmosphere for 20 h, to obtain a composite cathode material of lithium phosphate coated LiNi_{0.88}Co_{0.09}Al_{0.03}O₂.

### Test Methods

The cathode material was subjected to particle size testing using a Malvern Mastersizer 2000 laser particle sizer to obtain the particle size distribution and average particle size.

The particle hardness of the composite cathode material was tested using an Shimadzu Dynamic Ultra Microscopy Hardness Tester.

The surface area testing was performed on the cathode material using the Micromeritics Tristar 3020 type specific surface area and the pore size analyzer. A mass of powder is weighed, fully degassed under vacuum heating conditions. After surface adsorption being removed, the specific surface area of the particles is calculated by adsorption of the amount of nitrogen using a nitrogen adsorption process.

The cathode material was subjected to a powder conductivity test using a FT-8100 series of four probe method. A mass of powder is weighed, which is compacted at a pressure of 20 kN/cm², and the material powder conductivity is tested using a four-probe powder resistance tester.

Preparation of a 2032 coin cell: the cathode prepared by each of the examples, conductive carbon, and polyvinylidene fluoride were added to N-methylpyrrolidone in a ratio of 96:2:2, stirred to obtain slurry. The slurry was coated on aluminum foil and dried to be as a cathode. A lithium sheet was used as the negative electrode to prepare a 2032 type coin cell.

Discharge capacity, cycle performance, and rate performance test: electrical performance testing was performed at 25°C, 2.5 V to 4.3 V using an LAND battery test system. The initial charging was conducted to 4.3 V by a current of 0.1C rate, and the initial discharging was conducted to 2.5 V by a current of 0.1C rate. Then the cycle of charging and discharging was repeated, and the capacity retention of 50 cycles was recorded, where the charging was conducted to 4.3 V by a current of 0.5C rate and the discharging was conducted to 2.5 V by a current of 1C rate during the cycle,.

DCR test: electrical performance testing was conducted at 25°C, 2.5 V to 4.3 V using an Arbin cell test system. In the initial cycle, the charging was conducted to 4.3 V by a current of 0.5C rate, and the discharging was conducted to 2.5 V by a current of 1C rate. The value of the DCR was calculated by dividing the voltage drop value 10 seconds after start of the self-discharging by the current value.

EIS test: Electrochemical impedance test was performed on a 2032 type coin cell at 100% SOC at 25°C using a multichannel potentiostat (Bio-Logic, VMP3) at a frequency of 1 MHz to 1 mHz.

SEM test: The surface topography of the material was scanned by Hitachi S4800 scanning electron microscope.

EDS test: The electron microscopy was performed on the surface of the material by Hitachi S4800 scanning electron microscope.

Test of the Li position occupancy rate of Li ions: the prepared cathode material was determined by the powder X-ray diffraction using CuKα radiation, resulting in an X-ray diffraction pattern of the cathode material, then the Li position occupancy rate of Li ion was calculated by Rietveld analysis. The Rietveld analysis employed the method of: a crystal structure model was assumed for fitting the X-ray diffraction pattern obtained by the crystal structure model with the actual measured X-ray diffraction pattern. The lattice constant parameters of the crystal structure model was adjusted for conforming the two X-ray diffraction patterns, and calculating the Li position occupancy of the Li ions by the resulting lattice constant data.

The peak intensity ratio of the X-ray diffraction peak of (003) crystal plane /the X-ray diffraction peak of (104) crystal plane: the prepared cathode material was determined by the powder X-ray diffraction using CuKα radiation, resulting in an X-ray diffraction pattern of the cathode material, then the Li position occupancy rate of Li ion was calculated by the Rietveld analysis. The Rietveld analysis employed the method of: a crystal structure model was assumed for fitting the X-ray diffraction pattern obtained by the crystal structure model with the actual measured X-ray diffraction pattern. The lattice constant parameters of the crystal structure model was adjusted for conforming the two X-ray diffraction patterns, and calculating the ratio by the resulting X-ray diffraction peak intensity of (003) and (104) crystal planes.

It can be seen from FIGS. 2 and 4 that, the surface of the sample in which the filter cake is coated by phosphate in Example 1 has an obvious coating layer, while it does not employed a coating process in Comparative Example 1, resulting in a smooth surface.

It can be seen from FIGS. 3b and 5b that, under the same coating amount, in Example 1, the phosphorus content of the sample in which the filter cake is coated by phosphate in Example 1 is more and distributed uniform, while it does not employed a coating process in Comparative Example 1.

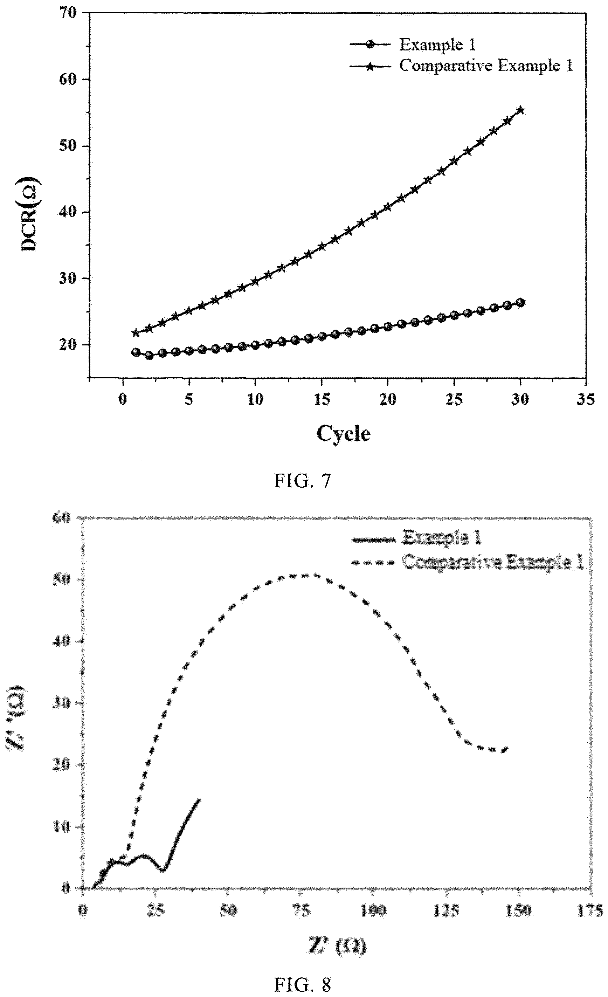

As shown in FIGS. 6-8, the sample of Example 1 had better cycling performance, lower DC internal resistance, and lower impedance due to the better lithium phosphate coating effect on its surface.

**TABLE 1 Test Results**

| | 0.1C Discharge Capacity (mAh/g) | 0.5C Discharge Capacity (mAh/g) | 1C Discharge Capacity (mAh/g) | 2C Discharge Capacity (mAh/g) | 50 cycle capacity retentio n (%) | the Li position occupan cy rate of Li ion (%) | I₀₀₃/I₁₀₄ | Particle Hardness of the Composite Cathode Material (Mpa) | Cs₁₀/Cs₅₀ |
|---|---|---|---|---|---|---|---|---|---|
| Example 1 | 211.6 | 203.1 | 195.4 | 190.4 | 96.3 | 0.985 | 1.34 | 59.8 | 0.87 |
| Example 2 | 212.4 | 204.5 | 194.3 | 189.5 | 95.4 | 0.983 | 1.44 | 56.4 | 0.85 |
| Example 3 | 239.7 | 230.2 | 215.3 | 207.2 | 92.2 | 0.985 | 1.37 | 63.5 | 0.82 |
| Example 4 | 204.3 | 197.4 | 189.3 | 184.7 | 98.2 | 0.984 | 1.40 | 72.3 | 0.87 |
| Example 5 | 209.8 | 202.6 | 195.5 | 190.8 | 95.6 | 0.982 | 1.42 | 60.3 | 0.90 |
| Example 6 | 215.3 | 205.2 | 199.6 | 195.3 | 96.1 | 0.982 | 1.37 | 57.6 | 0.92 |
| Example 7 | 213.1 | 205.2 | 194.7 | 189.8 | 96.5 | 0.983 | 1.33 | 65.5 | 0.93 |
| Comparat ive Example 1 | 210.6 | 196.3 | 188.9 | 181.3 | 83.3 | 0.975 | 1.19 | 45.6 | 0.62 |
| Comparat ive Example 2 | 210.2 | 198.4 | 191.6 | 184.8 | 85.2 | 0.977 | 1.24 | 47.0 | 0.66 |
| Comparat ive Example 3 | 201.5 | 189.9 | 184.8 | 179.6 | 87.6 | 0.971 | 1.27 | 48.2 | 0.69 |

It can be seen from the comparison of the experimental results shown in Table 1, the samples in which the filter cake is coated by phosphate have superior particle hardness, discharge capacity, cycling performance, and rate performance.

From the Li position occupancy rate of Li ions and the peak intensity ratio of the X-ray diffraction peak of (003) crystal plane /the X-ray diffraction peak of (104) crystal plane of Example 1 and Comparative Example 1, it can be seen that the sample in which filter cake is coated by phosphate has a higher Li position occupancy rate of Li ion concentration and higher peak intensity ratio of the X-ray diffraction peak of (003) crystal plane /the X-ray diffraction peak of (104) crystal plane, showing that the sample in which the filter cake is coated by phosphate has a lower cationic disorder of Li/Ni, and better structural stability and particle hardness.

Comparative Example 2 employs a liquid phase coating, partial phosphorous source and soluble lithium compound are lost with the solution. Thus the coating amount on the surface of the material is not easily controllable, resulting in a great difference in the specific surface area between of the material before and after coating, affecting the stability of the material structure.

Comparative Example 3 does not wash the sintered product during the preparation process, resulting in higher residual lithium on the surface of the cathode material, and resulting in increased directive current resistance, impacting capacity and rate performance of the material.

While the present application has been disclosed by preferred embodiments, it is not to limit the claims. Those skilled in the art can make various changes and modifications without departing from the concepts of the present application. Therefore, the scope of the present application shall be accorded the scope as defined by the following claims.

## Claims

1. A composite cathode material, **characterized in that** the composite cathode material comprises:
an active material having a chemical formula Liₐ(NiₓCo_{y}R_{z})_{1-b}M_{b}O₂, wherein 0.9≤a≤1.10, x+y+z=1, 0.8≤x≤0.99, 0≤y≤0.15, 0≤z≤0.1, 0≤b≤0.1; R comprises Al and/or Mn, and M comprises a metal element;
a coating layer distributed on a surface of the active material, wherein the coating layer comprise a phosphate compound;
the composite cathode material has a particle hardness of Cs≥50 Mpa and satisfies the following:
Cs₁₀/Cs₅₀≥0.7; wherein Cs₁₀ is hardness of particles with a particle size D10, and Cs₅₀ is hardness of particles with a particle size D50.

2. The composite cathode material according to claim 1, **characterized in that** the composite cathode material satisfies at least one of the following conditions a to c:
a. M of the Liₐ(NiₓCo_{y}R_{z})_{1-b}M_{b}O₂ comprises at least one of Mg, Sr, Ca, Ba, Ti, Zr, Mn, Y, Gd, W, Nb, La, and Mo;
b. the ratio of x-ray diffraction peak intensity I₀₀₃ of (003) crystal plane to x-ray diffraction peak intensity I₁₀₄ of (104) crystal plane of the active material is 1.25 or more;
c. the Li ion of the active material has an occupation ratio of 98% or more in the Li site of the crystal lattice.

3. The composite cathode material according to claim 1 or 2, **characterized in that** the composite cathode material satisfies at least one of the following conditions a to e:
a. the phosphate compound comprises at least one of Li₃PO ₄ and LiXPO ₄, wherein X comprises at least one of Na, K, Al, Sr, Zr, B, Mg, Ba, Ca, Co, and W;
b. the amount of the phosphate compound in the coating layer is from 0.05 wt% to 1.5 wt% of the mass of the active material;
c. the composite cathode material has a powder conductivity of from 0.001 S/cm to 0.1 S/cm;
d. the composite cathode material has a specific surface area of 0.2 m²/g to 2.0 m²/g;
e. the composite cathode material has an average particle size of 3 µm to 20 µm.

4. A method for preparing the composite cathode material according to any one of claims 1-3, **characterized in that** the method comprises:
mixing and sintering a primary component, a secondary component, and a lithium compound to yield a sintered product; wherein the primary component comprises at least one of NiₓCo_{y}R_{z}O, NiₓCo_{y}R_{z}(OH)₂, or NiₓCo_{y}R_{z}OOH, wherein x+y+z=1, 0.8≤x≤0.99, 0≤y≤0.15, 0≤z≤0.1, the secondary component comprises at least one of an oxide of M, a hydroxide of M, or a phosphate of M, M comprises a metal element, R comprises Al and/or Mn;
grinding the sintered product, and washing and filtering, resulting in a filter cake of active material;
coating a coating solution containing phosphate ions and lithium ions on the filter cake of active material in an atomization manner to yield a composite cathode material; wherein the composite cathode material comprises an active material and a coating layer distributed on the active material surface, and the coating layer includes a phosphate compound.

5. The method according to claim 4, **characterized in that** the method satisfies at least one of the following conditions a to d:
a. the lithium compound is added in an amount such that the ratio of the sum of the molar content of Ni, Co, and R to the molar content of Li in the primary component is 1:(0.9-1.10);
b. conditions for obtaining the sintered product are: heating up to 650°C to 850°C for sintering for 5 h to 20 h in a flowing oxygen atmosphere;
c. the primary component has an average particle size of 3 µm to 20 µm;
d. the lithium compound comprises at least one of lithium hydroxide, lithium carbonate, lithium acetate, lithium nitrate, and lithium oxalate.

6. The method according to claim 4, **characterized in that** the method satisfies at least one of the following conditions a to d:
a. a temperature of the washing is 10°C to 40°C and a time of the washing is 10 min to 60 min;
b. a wash solvent used is in an amount such that the sintered product (g)/the amount of the wash solvent (L) is 500 g/L to 2000 g/L;
c. a time of the filtration is 30 min to 150 min, the water content of the filter cake of active material is 5 wt% or less;
d. the filtering comprises one of a pressure filtration and a suction filtration.

7. The method according to claim 4, **characterized in that** before coating a coating solution comprising phosphate ions and lithium ions on the filter cake of active material in an atomizing coating manner, the method further comprising:
dissolving a phosphorous source and a soluble lithium compound in an aqueous solution to obtain the coating solution containing phosphate ions and lithium ions.

8. The method according to claim 7, **characterized in that** the method satisfies at least one of the following conditions a to e:
a. the phosphorous source comprises at least one of HPO₃, H₃PO₂, H₃PO₄, Li₃PO₄, K₃PO₄, BPO₄, NH₄H₂PO₄, (NH4)₂HPO₄, Zr(HPO₄)₂, Na₂HPO₄, SrHPO₄, aHPO₄, Ba₃(PO₄)₂, MgHPO₄, Ca(H₂PO₂)₂, Al(H₂PO₄)₃, CoHPO₄, or H₃P(W₃O₁₀)₄·nH₂O, wherein n≥1;
b. the soluble lithium compound comprises at least one of lithium hydroxide, lithium carbonate, lithium nitrate, lithium chlorate and lithium acetate;
c. in the coating solution, the molar ratio of lithium ions to phosphate ions is (0-10): 1;
d. the mass of phosphate in the phosphorous source accounts 0.05 wt% to 1.5 wt% of the filter cake of active material;
e. the total mass of the phosphorous source and the soluble lithium compound accounts 1.5 wt% to 45 wt% of the coating solution.

9. The method according to any one of claims 4-7, **characterized in that** the method satisfies at least one of the following conditions a to b:
a. the atomization manner comprises at least one of ultrasonic atomization and high pressure atomization;
b. in the coating process, a temperature of the coating is controlled to be 50°C to 100°C and a heat preservation is controlled to be 5 min to 60 min.

10. The method according to claim 4, **characterized in that** after the coating process, the method further comprises:
drying the composite cathode material, wherein a temperature of the drying is controlled to be 150°C to 210°C and a heat preservation is controlled to be 10 h to 24 h.

11. A lithium ion battery, **characterized in that** the lithium ion battery comprises a positive electrode, a negative electrode, a separator, a non-aqueous electrolyte, and a case, wherein the positive electrode comprises a current collector, and a composite cathode material according to any one of claims 1-3 or a composite cathode material as prepared by the method for preparing a composite cathode material according to any one of claims 4-10 coated on the current collector.

## Patentansprüche

1. Verbundkathodenmaterial, **dadurch gekennzeichnet, dass** das Verbundkathodenmaterial Folgendes umfasst:
ein aktives Material mit einer chemischen Formel Liₐ(NiₓCo_{y}R_{z})_{1-b}M_{b}O₂, wobei 0,9 ≤ a ≤ 1,10, x + y + z = 1, 0,8 ≤ x ≤ 0,99, 0 ≤ y ≤ 0,15, 0 ≤ z ≤ 0,1, 0 ≤ b ≤ 0,1; R Al und/oder Mn umfasst und M ein metallisches Element umfasst;
eine auf oder Oberfläche des aktiven Materials verteilte Beschichtung, wobei die Beschichtung eine Phosphatverbindung umfasst;
das Verbundkathodenmaterial eine Partikelhärte von Cs ≥ 50 Mpa aufweist und Folgendes erfüllt:
Cs₁₀/Cs₅₀ ≥ 0,7; wobei Cs₁₀ für eine Härte von Partikeln mit einer Partikelgröße von D10 und Cs₅₀ für eine Härte von Partikeln mit einer Partikelgröße von D50 steht.

2. Verbundkathodenmaterial nach Anspruch 1, **dadurch gekennzeichnet, dass** das Verbundkathodenmaterial mindestens eine der folgenden Bedingungen a bis c erfüllt:
a. M in Liₐ(NiₓCo_{y}R_{z})_{1-b}M_{b}O₂ umfasst Mg, Sr, Ca, Ba, Ti, Zr, Mn, Y, Gd, W, Nb, La und/oder Mo;
b. das Verhältnis der Röntgenbeugungsspitzenintensität I₀₀₃ der (003)-Kristallebene zu der Röntgenbeugungsspitzenintensität I₁₀₄ der (104)-Kristallebene des aktiven Materials beträgt 1,25 oder mehr;
c. das Li-Ion des aktiven Materials weist an der Li-Stelle des Kristallgitters einen Besetzungsgrad von 98 % oder mehr auf.

3. Verbundkathodenmaterial nach Anspruch 1 oder 2, **dadurch gekennzeichnet, dass** das Verbundkathodenmaterial mindestens eine der folgenden Bedingungen a bis e erfüllt:
a. die Phosphatverbindung umfasst Li₃PO₄ und/oder LiXPO₄, wobei X Na, K, Al, Sr, Zr, B, Mg, Ba, Ca, Co und/oder W umfasst;
b. der Anteil der Phosphatverbindung in der Beschichtung beträgt 0,05 Gew.-% bis 1,5 Gew.-% der Masse des aktiven Materials;
c. das Verbundkathodenmaterial weist eine Pulverleitfähigkeit von 0,001 S/cm bis 0,1 S/cm auf;
d. das Verbundkathodenmaterial weist eine spezifische Oberfläche von 0,2 m²/g bis 2,0 m²/g auf;
e. das Verbundkathodenmaterial weist eine mittlere Partikelgröße von 3 µm bis 20 µm auf.

4. Verfahren zur Herstellung des Verbundkathodenmaterials nach einem der Ansprüche 1 bis 3, **dadurch gekennzeichnet, dass** das Verfahren folgende Schritte umfasst:
Mischen und Sintern einer primären Komponente, einer sekundären Komponente und einer Lithiumverbindung zum Erhalten eines gesinterten Produkts; wobei die primäre Komponente NiₓCo_{y}R_{z}O, NiₓCo_{y}R_{z}(OH)₂ und/oder NiₓCo_{y}R_{z}OOH umfasst, wobei x + y + z = 1, 0,8 ≤ x ≤ 0,99, 0 ≤ y ≤ 0,15, 0 ≤ z ≤ 0,1, die sekundäre Komponente ein Oxid von M, ein Hydroxid von M und/oder ein Phosphat von M umfasst, M ein metallisches Element umfasst und R Al und/oder Mn umfasst;
Mahlen des gesinterten Produkts sowie Waschen und Filtern, wodurch ein Filterkuchen aus aktivem Material erhalten wird;
zerstäubendes Beschichten des Filterkuchens aus aktivem Material mit einer Phosphat-Ionen und Lithium-Ionen enthaltenden Beschichtungslösung zum Erhalten eines Verbundkathodenmaterials; wobei das Verbundkathodenmaterial ein aktives Material und eine auf der Oberfläche des aktiven Materials verteilte Beschichtung umfasst und die Beschichtung eine Phosphatverbindung umfasst.

5. Verfahren nach Anspruch 4, **dadurch gekennzeichnet, dass** das Verfahren mindestens eine der folgenden Bedingungen a bis d erfüllt:
a. die Lithiumverbindung wird in einer solchen Menge zugegeben, dass das Verhältnis der Summe des Molgehalts von Ni, Co und R zu dem Molgehalt von Li in der primären Komponente 1 : (0,9-1,10) beträgt;
b. Bedingungen für das Erhalten des gesinterten Produkts lauten: Erhitzen auf 650 °C bis 850 °C zum Sintern über einen Zeitraum von 5 h bis 20 h in einer strömenden Sauerstoffatmosphäre;
c. die primäre Komponente weist eine mittlere Partikelgröße von 3 µm bis 20 µm auf;
d. die Lithiumverbindung umfasst Lithiumhydroxid, Lithiumcarbonat, Lithiumacetat, Lithiumnitrat und/oder Lithiumoxalat.

6. Verfahren nach Anspruch 4, **dadurch gekennzeichnet, dass** das Verfahren mindestens eine der folgenden Bedingungen a bis d erfüllt:
a. eine Waschtemperatur beträgt 10 °C bis 40 °C und eine Waschdauer beträgt 10 min bis 60 min;
b. ein verwendetes Waschlösungsmittel liegt in einer solchen Menge vor, dass das Verhältnis gesintertes Produkt (g)/Menge an Waschlösungsmittel (L) 500 g/L bis 2000 g/L beträgt;
c. eine Filterdauer beträgt 30 min bis 150 min und der Wasseranteil des Filterkuchens aus aktivem Material beträgt 5 Gew.-% oder weniger;
d. das Filtern umfasst Druckfiltration oder Saugfiltration.

7. Verfahren nach Anspruch 4, **dadurch gekennzeichnet, dass** das Verfahren vor dem zerstäubenden Beschichten des Filterkuchens aus aktivem Material mit einer Phosphat-Ionen und Lithium-Ionen enthaltenden Beschichtungslösung des Weiteren Folgendes umfasst:
Lösen einer Phosphorquelle und einer löslichen Lithiumverbindung in einer wässrigen Lösung zum Erhalten der Phosphat-Ionen und Lithium-Ionen enthaltenden Beschichtungslösung.

8. Verfahren nach Anspruch 7, **dadurch gekennzeichnet, dass** das Verfahren mindestens eine der folgenden Bedingungen a bis e erfüllt:
a. die Phosphorquelle umfasst HPO₃, H₃PO₂, H₃PO₄, Li₃PO₄, K₃PO₄, BPO₄, NH₄H₂PO₄, (NH4)₂HPO₄, Zr(HPO₄)₂, Na₂HPO₄, SrHPO₄, aHPO₄, Ba₃(PO₄)₂, MgHPO₄, Ca(H₂PO₂)₂, Al(H₂PO₄)₃, CoHPO₄ und/oder H₃P(W₃O₁₀)₄·nH₂O, wobei n ≥ 1;
b. die lösliche Lithiumverbindung umfasst Lithiumhydroxid, Lithiumcarbonat, Lithiumnitrat, Lithiumchlorat und/oder Lithiumacetat;
c. in der Beschichtungslösung beträgt das Molverhältnis von Lithium-Ionen zu Phosphat-Ionen (0-10) : 1;
d. die Masse von Phosphat in der Phosphorquelle beträgt 0,05 Gew.-% bis 1,5 Gew.-% des Filterkuchens aus aktivem Material;
e. die Gesamtmasse der Phosphorquelle und der löslichen Lithiumverbindung beträgt 1,5 Gew.-% bis 45 Gew.-% der Beschichtungslösung.

9. Verfahren nach einem der Ansprüche 4 bis 7, **dadurch gekennzeichnet, dass** das Verfahren mindestens eine der folgenden Bedingungen a bis b erfüllt:
a. die Zerstäubung umfasst Ultraschallzerstäubung und/oder Hochdruckzerstäubung;
b. in dem Beschichtungsprozess wird eine Beschichtungstemperatur auf 50°C bis 100 °C und eine Wärmeerhaltung auf 5 min bis 60 min geregelt.

10. Verfahren nach Anspruch 4, **dadurch gekennzeichnet, dass** das Verfahren nach dem Beschichtungsprozess des Weiteren Folgendes umfasst:
Trocknen des Verbundkathodenmaterials, wobei eine Trocknungstemperatur auf 150 °C bis 210 °C und eine Wärmeerhaltung auf 10 h bis 24 h geregelt wird.

11. Lithiumionenbatterie, **dadurch gekennzeichnet, dass** die Lithiumionenbatterie eine positive Elektrode, eine negative Elektrode, eine Trenneinrichtung, einen nichtwässrigen Elektrolyt und ein Gehäuse umfasst, wobei die positive Elektrode einen Stromabnehmer und ein Verbundkathodenmaterial nach einem der Ansprüche 1 bis 3 bzw. ein nach dem Verfahren zur Herstellung eines Verbundkathodenmaterials nach einem der Ansprüche 4 bis 10 hergestelltes Verbundkathodenmaterial als Beschichtung auf dem Stromabnehmer umfasst.

## Revendications

1. Matériau de cathode composite, **caractérisé en ce que** le matériau de cathode composite comprend :
un matériau actif ayant une formule chimique Liₐ(NiₓCo_{y}R_{z})_{1-b}M_{b}O₂, dans laquelle 0,9 ≤ a ≤ 1,10, x + y + z = 1, 0,8 ≤ x ≤ 0,99, 0 ≤ y ≤ 0,15, 0 ≤ z ≤ 0,1, 0 ≤ b ≤ 0,1 ; R comprend Al et/ou Mn et M comprend un élément métallique ;
une couche de revêtement distribuée sur une surface du matériau actif, dans lequel la couche de revêtement comprend un composé de phosphate ;
le matériau de cathode composite a une dureté particulaire de Cs ≥ 50 Mpa et satisfait l'équation suivante :
Cs₁₀/Cs₅₀ ≥ 0,7 ; dans laquelle Cs₁₀ est la dureté de particules ayant une taille particulaire D10 et Cs₅₀ est la dureté de particules ayant une taille particulaire D50.

2. Matériau de cathode composite selon la revendication 1, **caractérisé en ce que** le matériau de cathode composite satisfait au moins une des conditions a à c suivantes :
a. M dans Liₐ(NiₓCo_{y}R_{z})_{1-b}M_{b}O₂ comprend au moins un parmi Mg, Sr, Ca, Ba, Ti, Zr, Mn, Y, Gd, W, Nb, La et Mo ;
b. le rapport entre l'intensité de pic de diffraction de rayons X I₀₀₃ du plan cristallin (003) et l'intensité de pic de diffraction de rayons X I₁₀₄ du plan cristallin (104) du matériau actif est égal ou supérieur à 1,25 ;
c. l'ion Li du matériau actif a un taux d'occupation de 98 % ou plus dans le site Li du réseau cristallin.

3. Matériau de cathode composite selon la revendication 1 ou 2, **caractérisé en ce que** le matériau de cathode composite satisfait au moins une des conditions a à e suivantes :
a. le composé de phosphate comprend au moins un parmi Li₃PO₄ et LiXPO₄, dans lequel X comprend au moins un parmi Na, K, Al, Sr, Zr, B, Mg, Ba, Ca, Co et W ;
b. la teneur du composé de phosphate dans la couche de revêtement est de 0,05 % en poids à 1,5 % en poids de la masse du matériau actif ;
c. le matériau de cathode composite a une conductivité de poudre de 0,001 S/cm à 0,1 S/cm ;
d. le matériau de cathode composite a une surface spécifique de 0,2 m²/g à 2,0 m²/g ;
e. le matériau de cathode composite a une taille particulaire moyenne de 3 µm à 20 µm.

4. Procédé de préparation du matériau de cathode composite selon l'une quelconque des revendications 1 à 3, **caractérisé en ce que** le procédé comprend les étapes consistant à :
mélanger et fritter un composant primaire, un composant secondaire et un composé de lithium afin d'obtenir un produit fritté ; dans lequel le composant primaire comprend au moins un parmi NiₓCo_{y}R_{z}O, NiₓCo_{y}R_{z}(OH)₂ ou NiₓCo_{y}R_{z}OOH, dans lequel x + y + z = 1, 0,8 ≤ x ≤ 0,99, 0 ≤ y ≤ 0,15, 0 ≤ z ≤ 0,1, le composant secondaire comprend au moins un parmi un oxyde de M, un hydroxyde de M ou un phosphate de M, M comprend un élément métallique et R comprend Al et/ou Mn ;
moudre le produit fritté et laver et filtrer, produisant ainsi un gâteau de filtre en matériau actif ;
revêtir le gâteau de filtre en matériau actif d'une solution de revêtement contenant des ions de phosphate et des ions de lithium par atomisation afin d'obtenir un matériau de cathode composite ; dans lequel le matériau de cathode composite comprend un matériau actif et une couche de revêtement distribuée sur la surface du matériau actif et la couche de revêtement comprend un composé de phosphate.

5. Procédé selon la revendication 4, **caractérisé en ce que** the procédé satisfait au moins une des conditions a à d suivantes :
a. le composé de lithium est ajouté en une telle quantité que le rapport entre la somme de la teneur molaire de Ni, Co et R et la teneur molaire de Li dans le composant primaire est 1 : (0,9-1,10) ;
b. des conditions pour obtenir le produit fritté sont: chauffage à de 650 °C à 850 °C pour le frittage pendant 5 h à 20 h dans une atmosphère d'oxygène coulante ;
c. le composant primaire a une taille particulaire moyenne de 3 µm à 20 µm ;
d. le composé de lithium comprend au moins un parmi l'hydroxyde de lithium, le carbonate de lithium, l'acétate de lithium, le nitrate de lithium et l'oxalate de lithium.

6. Procédé selon la revendication 4, **caractérisé en ce que** le procédé satisfait au moins une des conditions a à d suivantes :
a. une température du lavage est de 10 °C à 40 °C et une durée du lavage est de 10 min à 60 min ;
b. un solvant de lavage utilisé est en une telle quantité que le produit fritté (g)/la quantité du solvant de lavage (L) est de 500 g/L à 2000 g/L ;
c. une durée de la filtration est de 30 min à 150 min, la teneur en eau du gâteau de filtre en matériau actif est égale ou inférieure à 5 % en poids ;
d. la filtration comprend une parmi la filtration sous pression et la filtration sous vide.

7. Procédé selon la revendication 4, **caractérisé en ce qu'**avant l'étape consistant à revêtir le gâteau de filtre en matériau actif d'une solution de revêtement comprenant des ions de phosphate et des ions de lithium par atomisation, le procédé comprend en outre l'étape consistant à :
dissoudre une source de phosphore et un composé de lithium soluble dans une solution aqueuse afin d'obtenir la solution de revêtement contenant des ions de phosphate et des ions de lithium.

8. Procédé selon la revendication 7, **caractérisé en ce que** le procédé satisfait au moins une des conditions a à e suivantes :
a. la source de phosphore comprend au moins un parmi HPO₃, H₃PO₂, H₃PO₄, Li₃PO₄, K₃PO₄, BPO₄, NH₄H₂PO₄, (NH4)₂HPO₄, Zr(HPO₄)₂, Na₂HPO₄, SrH-PO₄, aHPO₄, Ba₃(PO₄)₂, MgHPO₄, Ca(H₂PO₂)₂, Al(H₂PO₄)₃, CoHPO₄ ou H₃P(W₃O₁₀)₄·nH₂O, dans lequel n ≥ 1 ;
b. le composé de lithium soluble comprend au moins un parmi l'hydroxyde de lithium, le carbonate de lithium, le nitrate de lithium, le chlorate de lithium et l'acétate de lithium ;
c. dans la solution de revêtement, le rapport molaire entre des ions de lithium et des ions de phosphate est (0-10) : 1 ;
d. la masse de phosphate dans la source de phosphore est de 0,05 % en poids à 1,5 % en poids du gâteau de filtre en matériau actif ;
e. la masse totale de la source de phosphore et du composé de lithium soluble est de 1,5 % en poids à 45 % en poids de la solution de revêtement.

9. Procédé selon l'une quelconque des revendications 4 à 7, **caractérisé en ce que** le procédé satisfait au moins une des conditions a à b suivantes :
a. l'atomisation comprend au moins un parmi l'atomisation ultrasonique et l'atomisation sous haute pression ;
b. dans le processus de revêtement, une température du revêtement est réglée à de 50°C à 100 °C et une préservation de chaleur est réglée à de 5 min à 60 min.

10. Procédé selon la revendication 4, **caractérisé en ce qu'**après le processus de revêtement, le procédé comprend en outre l'étape consistant à :
sécher le matériau de cathode composite, dans lequel une température du séchage est réglée à de 150 °C à 210 °C et une préservation de chaleur est réglée à de 10 h à 24 h.

11. Batterie lithium-ion, **caractérisée en ce que** la batterie lithium-ion comprend une électrode positive, une électrode négative, un séparateur, un électrolyte non-aqueux et une boîte, l'électrode positive comprenant un collecteur de courant et un matériau de cathode composite selon l'une quelconque des revendications 1 à 3 ou un matériau de cathode composite préparé par le procédé de préparation d'un matériau de cathode composite selon l'une quelconque des revendications 4 à 10 comme revêtement sur le collecteur de courant.
